(19) Europäisches Patentamt

European Patent Office

Office européen des brevets

(11) **EP 1 589 052 A1**

(12) **EUROPEAN PATENT APPLICATION**

(43) Date of publication:
26.10.2005 Bulletin 2005/43

(51) Int Cl.⁷: **C08F 283/12**, C08L 27/16, C08L 51/08, C08L 83/10

(21) Application number: **04101626.2**

(22) Date of filing: **20.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(71) Applicant: **SOLVAY (Société Anonyme)**
**1050 Bruxelles (BE)**

(72) Inventor: **Martin, Roland**
**1932 St-Stevens-Woluwe (BE)**

(74) Representative: **Jacques, Philippe et al**
**Solvay S.A.**
**Département de la Propriété Industrielle,**
**Rue de Ransbeek, 310**
**1120 Bruxelles (BE)**

(54) **Composition of fluorocarbon resin and siloxane elastomer**

(57) The invention relates to a composition comprising:

(A) from 50 to 95 % by weight of a thermoplastic fluorocarbon resin, and
(B) from 5 to 50 % by weight of at least one at least partially grafted functional siloxane elastomer,

which is non-crosslinked and in which the grafted functional siloxane elastomer is at least 2,5 % by weight, expressed with respect to the total weight of (A) plus (B) free from non-grafted functional siloxane elastomer.

The invention also relates to a process for the preparation of said composition and the use of said composition as compatibilizer or in mono- or multilayer structures.

Figure 1

$$logIV \leq 0{,}74logMw - 1{,}78$$

**Description**

The invention concerns a composition of thermoplastic fluorocarbon resin and of at least one at least partially grafted functional siloxane elastomer as well as the process for its preparation and its use.

Fluorocarbon resins, in particular vinylidene fluoride resins, are well known for their excellent resistance to high temperature, organic solvents and to various chemically aggressive environments. Although they display high strength and ductility over a broad range of temperatures, they become rather brittle at temperature not much below freezing conditions.

Copolymers containing smaller amounts of a different fluorinated comonomer have been produced to alleviate such a deficiency, but they exhibit a much lower melting point and a decrease in mechanical strength. Notwithstanding such deterioration in performance, copolymers often suffer considerable embrittlement at temperature below -30°C. As there are many applications specifying a high level of ductility to temperature down to -50°C and continuous use in the temperature region of 125-150°C, there is a need to improve further the low temperature toughness of fluorocarbon resins, in particular of vinylidene fluoride polymers, without reducing the melting point.

To meet the above stringent requirements many attempts have been made to toughen fluorocarbon resins with silicone, optionally fluorosilicone, elastomers, taking advantage of the extremely low glass transition temperature and thermo-oxidative stability of these elastomers.

It is, however, particularly difficult to uniformly mix the silicone elastomer and the fluorocarbon resin. This particular combination of polymers is highly incompatible, exhibiting a rather coarse morphology and poor interfacial adhesion, which results in drastic deterioration in mechanical properties.

Increased compatibilisation efficiency for these blends can be achieved by at least partially grafting the silicone elastomer on the fluorocarbon polymer chains.

Techniques are known for grafting at the melt state or in aqueous suspension, silicone elastomers to fluorocarbon resins in the presence of radical initiator and optionally coupling agents.

Blends of vinylidene fluoride resins and organosilicon compounds have been disclosed in the Japanese applications JP 02-34608 and JP 02-34609: improved toughness of PVDF is claimed by means of grafting procedures of organosilicon compounds. As grafting is realized either in bulk vinylidene fluoride or in aqueous suspension, the efficiency of these processes is expected to be low, enabling only low grafting levels and poor homogeneity of the dispersion of the silicon compound in the fluorocarbon matrix.

Main drawbacks of techniques of the prior art are that the grafting efficiency is generally low; moreover uncontrolled crosslinking reaction occurs unavoidably to form three-dimensional networks, resulting in an undesired product which fails to give the required properties and which is insoluble and not melt-processible (not melt-welded, not recyclable, for instance).

According to the present invention, the above-mentioned difficulties are remarkably overcome in the presented non-crosslinked composition comprising a thermoplastic fluorocarbon resin and at least one functional siloxane elastomer, wherein the siloxane elastomer is at least partially grafted to the fluorocarbon resin.

Another object of the invention is a process for the preparation of such non-crosslinked composition by forming the chemical linkage between the two types of polymers during the polymerization process.

Another object of the invention is the use of the non-crosslinked composition as compatibilizer in fluorocarbon resin/siloxane elastomer blends to improve miscibility and adhesion properties, or the use of these compositions as such or in combination with a fluorocarbon resin in mono- or multilayer structures (films, coatings, hollow bodies, pipes and the like).

According to the present invention, it is provided a composition comprising:

(A) from 50 to 95 % by weight of a thermoplastic fluorocarbon resin, and
(B) from 5 to 50 % by weight of at least one at least partially grafted functional siloxane elastomer,

said composition being non-crosslinked and the grafted functional siloxane elastomer being at least 2,5 % by weight, expressed with respect to the total weight of (A) and (B) free from non-grafted functional siloxane elastomer.

Component (A) of the present invention is a thermoplastic fluorocarbon resin.

For the purposes of this invention, the term thermoplastic fluorocarbon resin designates both the thermoplastic fluorocarbon resin as such and the fluorocarbon resin segments chemically linked to the functional siloxane elastomer in the grafted copolymer.

The term "thermoplastic resin" is understood for the purposes of the present invention to mean polymers which at room temperature, exist below their glass transition temperature if they are amorphous or below their melting point if they are crystalline. These polymers have the property of becoming soft when they are heated and of becoming rigid again when they are cooled, without there being an appreciable chemical change. Such a definition may be found, for example, in the encyclopedia entitled "Polymer Science Dictionary", 2nd edition, Mark Alger, School of Polymer Technology, University of North London, London, UK, Chapman & Hall, published in 1997.

The thermoplastic fluorocarbon resin according to the invention are therefore not polymers usually termed rubbers, that is to say amorphous polymers which, at room temperature, exist above their glass transition temperature so that the chain segments may undergo considerable motion. These polymers are therefore flexible and deformable, being so soft that, in order to be used, they must generally be crosslinked by vulcanization (hence so called elastomer polymers). The rubber elasticity of these polymers actually appears after vulcanization. Such definition may be found, for example, in the same encyclopedia mentioned above.

The thermoplastic fluorocarbon resins of the invention are preferably semicrystalline thermoplastic fluorocarbon resins. Semicrystalline thermoplastic resins within the meaning of the present invention are thermoplastic polymers which exist, at room temperature, between their glass transition temperature and their melting point and are characterized by a certain degree of crystallinity. The semicrystalline thermoplastic fluorocarbon resins according to the invention are generally characterized by a non-zero conventional crystallinity index.

Thus it is contemplated that the semicrystalline thermoplastic fluorocarbon resin may be a vinylidene fluoride resin, a polymer of vinyl fluoride (hereinafter "PVF"), a polymer of chlorotrifluoroethylene (hereinafter "PCTFE"), a copolymer of chlorotrifluoroethylene with ethylene (hereinafter "ECTFE"), a copolymer of hexafluoropropylene with ethylene, a copolymer of tetrafluoroethylene and perfluoro alkylvinyl ether (for example of perfluoropropylvinyl ether, hereinafter "PFA" and of perfluoromethylvinyl ether, hereinafter "MFA"), a copolymer of tetrafluoroethylene and hexafluoropropene (hereinafter "FEP") or a copolymer of tetrafluoroethylene and ethylene (hereinafter "ETFE").

Preferably, component (A) of the composition is a vinylidene fluoride resin. For the purposes of the invention, the term vinylidene fluoride resin denotes vinylidene fluoride ($VF_2$) homopolymers and vinylidene fluoride ($VF_2$) copolymers preferably containing at least 75 %, more preferably at least 80 %, particularly preferably at least 83% by weight of $VF_2$, and at least one other monomer copolymerisable with $VF_2$, fluorinated or not.

More preferably, component (A) of the composition is a vinylidene fluoride ($VF_2$) homopolymer or a vinylidene fluoride ($VF_2$) copolymer containing at least 75 %, more preferably at least 80 %, particularly preferably at least 83% by weight of $VF_2$, and at least one other fluorinated comonomer.

Advantageously, the fluorinated comonomer(s) may be chosen, for example, from the vinyl fluoride; trifluoroethylene (TrFE); chlorotrifluoroethylene (CTFE); 1,2-difluoroethylene; tetrafluoroethylene (TFE); hexafluoropropylene (HFP); perfluoro(alkyl)vinyl ethers, such as perfluoro(methyl)vinyl ether (PMVE), perfluoro(ethyl)vinyl ether (PEVE), 2,2,4-trifluoro-5-trifluoromethoxy-1,3-dioxole and perfluoro-1,3-dioxole. Preferably, the possible comonomer(s) are chosen from chlorotrifluoroethylene (CTFE), hexafluoropropylene (HFP), trifluoroethylene (TrFE), tetrafluoroethylene (TFE) and mixture thereof.

Particularly preferably, component (A) of the composition is a $VF_2$ homopolymer.

The composition of the invention comprises at least 50 %, preferably at least 60 %, more preferably at least 65 % by weight of a thermoplastic fluorocarbon resin.

The composition of the invention comprises at most 95 %, preferably at most 94,5 %, more preferably at most 92 % by weight of a thermoplastic fluorocarbon resin.

Component (B) of the present invention is at least one at least partially grafted functional siloxane elastomer.

Thus it is contemplated that the component (B) may be one at least partially grafted functional elastomer or a mixture of two or more different at least partially grafted functional elastomers.

Preferably, the component (B) is one at least partially grafted functional elastomer.

For the purposes of the invention, the term at least partially grafted functional siloxane elastomer means that the functional siloxane elastomer is at least partially or optionally totally chemically linked to the fluorocarbon thermoplastic resin to yield a grafted copolymer.

This term at least partially grafted functional siloxane elastomer designates therefore both the functional siloxane elastomer carrying the functional group as such (named non-grafted functional siloxane elastomer) and the functional siloxane elastomer segments chemically linked to the thermoplastic fluorocarbon resin in the graft copolymer (named grafted functional siloxane elastomer).

For the purposes of this invention, the term functional siloxane elastomer designates linear, branched or cyclic organosiloxane homo- and co-polymers

- carrying at least one functional group in the molecule;
- consisting of one or more (different in their R and R') kind(s) of repeating units of formula I :

$$-[Si(R)(R')-O]-  \qquad (I)$$

wherein R and R' are independently selected from the group consisting of hydrogen, fluorinated or non fluorinated straight or branched alkyl chain having less than 20 carbon atoms, alkenyl chain having less than 20 carbon atoms,

ary group and aryl group substituted with an amino, hydroxyl, mercapto, fluorinated or non fluorinated alkyl or alkenyl group having less than 20 carbon atoms; and

- characterized by a polymerization degree DP (total number of repeating units of formula I) exceeding 100.

Alkyl, alkenyl and aryl examples of R and R' are known and include methyl, ethyl, ethylene, propyl, propylene, butyl, butylene, pentyl, pentylene, phenyl, naphthyl, halobenzyl, and the like.

For the purposes of the invention, the mechanical properties of the functional siloxane elastomer, optionally after vulcanization, advantageously fulfill the requirement for being an elastomer, as defined by ASTM in the Special Technical Publication No. 184: the material shall be stretched, at ambient temperature, to twice its initial length and shall recover, once released, its initial length to within 10 %.

Specific examples of functional siloxane elastomers include, but are not limited to, vinyl functional poly(dimethylsiloxane), methacryloxypropyl functional poly(dimethylsiloxane), acryloxypropyl functional poly(dimethylsiloxane), vinyl functional poly(methyl-3,3,3-trifluoropropyl)siloxane, vinyl functional poly(acryloxypropylmethylsiloxane-co-dimethylsiloxane), vinyl functional poly(methylvinylsiloxane-co-methyl-3,3,3-trifluoropropylsiloxane) and vinyl functional poly (dimethylsiloxane-co-methyl-3,3,3-trifluoropropylsiloxane).

At least one functional group is advantageously covalently attached to the polysiloxane backbone, either connected to any of the R or R' groups or linked to the silicon or oxygen atoms as end groups via a suitable bridging group. Preferably, the functional siloxane elastomer has only one functional group per molecule.

The functional group is advantageously an ethylenically unsaturated group, having less than 20 carbon atoms. Preferably, the functional group may be an alkene, an acrylic or a methacrylic group, more preferably is a moiety having formula selected from the group consisting of $-CH=CH_2$, $-O-C(O)-CH=CH_2$, $-O-C(O)-C(CH_3)=CH_2$, $-O-C(O)-CF=CH_2$, and $-O-C(O)-C(CF_3)=CH_2$, particularly preferably is a vinyl group of formula $-CH=CH_2$.

Functional dimethylsiloxane homo- and copolymer elastomers and functional methyl-3,3,3-trifluoropropylsiloxane homo- and copolymer elastomers are preferred.

Functional dimethylsiloxane homo- and copolymer elastomers are particularly preferred.

All the above mentioned siloxane copolymer elastomers preferably consist of only two kinds of repeating units of formula 1.

Vinyl functional dimethylsiloxane homopolymer elastomer is most preferred.

The functional siloxane elastomer is preferably characterized by a polymerization degree of at least 120, more preferably of at least 130.

The composition of the invention comprises at least 5 %, preferably at least 5,5 %, more preferably at least 6 % by weight of at least one at least partially grafted functional siloxane elastomer.

The composition of the invention comprises at most 50 %, preferably at most 40 %, more preferably at most 35 % by weight of at least one at least partially grafted functional siloxane elastomer.

The composition of the invention is non-crosslinked, that is to say that the gels content does not exceed 1 % wt. For the purposes of this invention, the extent of crosslinking is advantageously assessed from measurements of the gel content of small samples, dissolved at 80°C during 4 hours in N,N-dimethylformamide stabilized with LiBr (0,1 M). The insoluble residue (gel) is advantageously weighted after drying out the solvent in a vacuum oven at 90 °C to constant weight.

If the gels content of the composition exceeds 1 % wt, this results in an undesired product which fails to give the required properties and which is partially insoluble and not melt-processable at acceptable flow rate.

Non-grafted functional siloxane elastomer is advantageously removed from the non-crosslinked composition by petroleum ether extraction in a continuous Soxhlet apparatus at reflux or by continuous extraction with liquid or supercritical $CO_2$. The washings obtained by these techniques, concentrated under vacuum, do not advantageously comprise neither the thermoplastic fluorocarbon resin nor the grafted functional siloxane elastomer.

Composition obtained after removal of the non-grafted siloxane elastomer from the inventive composition is still an object of the invention. After removal of the non-grafted siloxane elastomer, in the inventive composition, the at least one at least partially grafted functional siloxane elastomer(s) is advantageously totally chemically linked to the fluorocarbon thermoplastic resin.

The grafted functional siloxane elastomer is advantageously at most 50 %, preferably at most 25 %, more preferably at most 20 % by weight, expressed with respect to the total weight of (A) and (B) free from non-grafted functional siloxane elastomer.

The grafted functional siloxane elastomer is at least 2,5 %, preferably at least 3 %, more preferably at least 4 % by weight, expressed with respect to (A) plus (B) free from non-grafted functional siloxane elastomer.

When the grafted functional siloxane elastomer fraction in the grafted material is at least 2,5 % by weight, expressed with respect to the total weight of (A) plus (B) free from non-grafted functional siloxane elastomer, the composition advantageously delivers the requested increased compatibilisation efficiency between the thermoplastic fluorocarbon resin and the siloxane elastomer: its structure results thus more homogeneous and mechanical properties are improved.

Advantageously, when the thermoplastic fluorocarbon resin is a vinylidene fluoride resin, preferably when the thermoplastic fluorocarbon resin is a vinylidene fluoride homopolymer, the composition of the invention is characterized in that the relation between their intrinsic viscosity (IV), as measured at 40°C in N,N-dimethylformamide, and their molecular weight ($M_w$), expressed in kDalton, as measured by gel permeation chromatography, is described by the following inequality:

$$\log (IV) \leq 0{,}74 \log (M_w) - 1{,}78$$

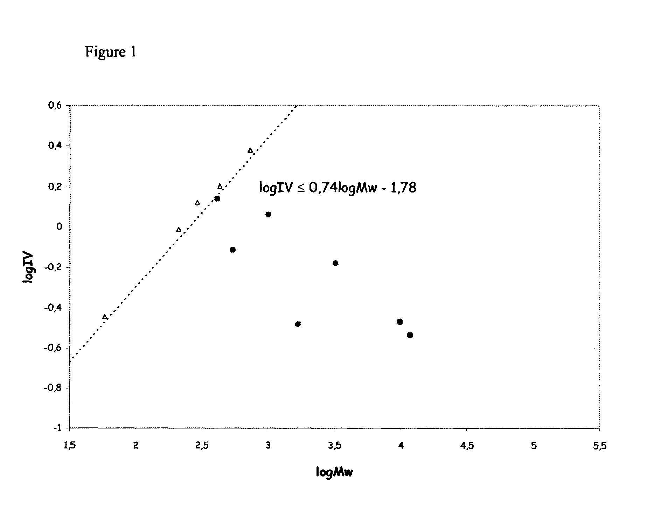

Figure 1 depicts the relationship between the logarithm of the intrinsic viscosity (IV) and the logarithm of the molecular weight, expressed in kDalton ($M_w$), for several compositions according to the invention, in which the thermoplastic fluorocarbon resin is a vinylidene fluoride homopolymer (symbol •) and for comparative PVDF homopolymers (symbol $\triangle$). Dotted line, which separates inventive compositions from comparative PVDF homopolymers, correspond to the above-mentioned relation, namely $\log (IV) = 0{,}74 \log (M_w) - 1{,}78$.

Commercially available compounding ingredients, modifiers or stabilizers may be advantageously added to the composition of the invention for instance to increase temperature performance, flame resistance, to improve extrudability, enhance mold release or resistance to greases, oil or fuels. Pigments can be optionally added to impart color.

Fillers may be also advantageously added to the inventive composition, for instance to increase hardness and modulus, or to lower oil swell. Commonly used fillers are silica, alumina, ground quartz and diatomaceous earth, calcium carbonate, magnesium oxide, carbon black, clays and the like.

Curing agents, such as peroxides, may be advantageously added to the inventive composition to enable vulcanization of the siloxane elastomer during or after processing.

The composition of the invention may be advantageously processed by usual techniques (molding, extrusion, solution spinning, casting and the like).

The invention also relates to a process for the preparation of the composition according to the invention, such process comprising polymerizing at least one fluorinated monomer and at least one functional siloxane elastomer in the presence of a radical initiator.

Preferably, the process of the invention is suitable for the preparation of a composition comprising a vinylidene fluoride resin, that is to say for the polymerization of vinylidene fluoride and optionally at least one other fluorinated comonomer and at least one functional siloxane elastomer.

Radical initiators capable of initiating and/or accelerating the polymerization are well known to those skilled in the art. As representative example of initiators for the radical polymerization of fluorinated monomers and functional siloxane elastomers, mention may be made of dialkylperoxydicarbonate, acetyl cyclohexane sulphonyl peroxide, 2,2'-azobis(isobutyro-nitrile) ("AIBN"), dibenzoyl peroxide, dicumylperoxide, perfluoro peroxydes, t-alkyl perbenzoates and t-alkyl perpivalates. However preference is given to dialkyl peroxydicarbonates, such as diethyl and diisopropyl peroxydicarbonates, to t-alkyl perpivalates, such as t-butyl and t-amyl perpivalates and to fluorinated peroxydes, such as perfluoro-n-butyrylperoxide or 2-trifluoromethoxy-1,1,1,2-tetrafluoro-n-propyrylperoxide.

The initiator may be employed altogether at the start of the polymerization or in portions or continuously during the polymerization. The amount of initiator employed for the polymerization is not critical. It is therefore possible to employ the usual amount of initiators, that is to say about 0,05 to 3 %, preferably 0,05 to 2,5 % and more particularly preferably about 0,05 to 1 % by weight with respect to the monomers employed.

Process can advantageously be carried out in bulk, solution, suspension, dispersion or emulsion phase, in continuous steady-state conditions, semi-continuous conditions or in a batch-wise manner.

Preferably, the polymerization medium of the process according to the invention comprises carbon dioxide in a liquid or supercritical phase.

The Applicant has surprisingly found that a polymerization medium comprising carbon dioxide in a liquid or supercritical phase is particularly advantageous for the preparation of the composition according to the invention, as it allows efficient solubilisation of the functionalized siloxane elastomer and of the fluorinated monomer(s).

It has been also surprisingly observed that when the polymerization medium comprises carbon dioxide in a liquid or supercritical phase, the polymerization of at least one fluorinated monomer and at least one functional siloxane elastomer in the presence of a radical initiator advantageously occurs without fouling or deposit formation on the reactor walls.

It has been also surprisingly observed that when the polymerization medium comprises carbon dioxide in a liquid or supercritical phase, the product is obtained as dry powder having improved morphology (particles size distribution).

Preferably, the process according to the invention is carried out in continuous steady state conditions.

The manner in which the fluorinated monomers and the functional siloxane elastomers are employed is not critical. The fluorinated monomers may be employed all at the start of the polymerization or else a portion of the fluorinated monomers may be added at the start of the polymerization and the rest during polymerization. The functional siloxane elastomers may be employed all at the start of the polymerization or else a portion of the functional siloxane elastomers may be added at the start of the polymerization and the rest during polymerization.

Preferably, in the process according to the invention, at least a part of the fluorinated monomers and of the functional siloxane elastomers is introduced at the start of the polymerization.

The weight ratio between the functional siloxane elastomer and the fluorinated monomers introduced at the start and during the polymerization advantageously ranges from 0,25 to 25 %, preferably from 0,5 to 20 %, particularly preferably from 1 to 10 %.

In general, the polymerization is carried out in stirred tank reactors provided with a blade or shaft stirrer or impeller or in loop reactors equipped with a circulating means (centrifugal pump, axial pump, impeller and the like).

The polymerization may be also carried out in the presence of chain regulators or other polymerization additives, such as suspending agents, antifouling agents, surfactants, and the like.

When a chain regulator is used, this is employed in the usual amounts. To be more specific, the chain regulators are generally employed in an amount of about 0,5 to 5 % by weight with respect to the fluorinated monomer(s) employed. The chain regulator may be employed all at the start of the polymerization or else in portions or continuously during polymerization.

Generally, polymerization temperature exceeds -50°C, preferably -20 °C, particularly preferably 0°C. Usually, temperature is less than 200°C, preferably less than 175 °C, particularly preferably less than 150°C, most preferably less than 100°C.

Generally, polymerization pressure exceeds 5 bar, preferably 35 bar, particularly preferably 40 bar. Usually, polymerization pressure is less than 3000 bar, preferably less than 1000 bar, particularly preferably less than 700 bar, most preferably less than 500 bar.

The invention also relates to the use of the non-crosslinked composition of the invention as compatibilizer between a fluorocarbon resin phase and a siloxane elastomer phase. The miscibility and the adhesion properties are therefore advantageously improved.

The invention also relates to the use of the composition of the invention as such or in combination with a fluorocarbon resin in mono- or multilayer structures (films, coatings, hollow bodies, pipes and the like).

The composition of the invention has the advantage of being rich in grafted copolymer (grafted siloxane elastomer weight fraction exceeding 2,5 % wt), thus enabling good compatibilization properties between a fluorocarbon resin and a siloxane elastomer phase even at low compatibilizer concentrations. Moreover, thanks to the high level of grafting, an improved mechanical behavior (especially after curing) at low temperature is achieved by the composition as such or in combination with a fluorocarbon resin.

The process of the invention, especially when carried out in a $CO_2$ medium, is particularly advantageous as is a simple, clean and well controlled "one pot" process, giving high grafting efficiency without crosslinking. The composition of the invention can be advantageously directly obtained from this process as a dry powder ready to be melt processed as such, or added as a modifier to a fluorocarbon resin.

Specific embodiments of the invention will now be described in detail. These Examples are intended to be illustrative, and the invention is not limited to the materials, conditions, or process parameters set forth in these embodiments.

Initiators

The following initiators have been used in the polymerization runs:

**X07:** diethylperoxydicarbonate (DEPDC) was synthesized in water medium according to the method published in F. Strain et al., J. Am. Chem. Soc., 72, 1254-1263 (1950) and extracted into 1,1,1,3,3-pentafluorobutane in order to obtain a solution 10 % wt of DEPDC in the solvent.

**TAPPI:** t-amylperpivalate [$CH_3$-$CH_2$-$C(CH_3)_2$-O-O-C(O)-$C(CH_3)_3$] as a solution in isododecane.

**4P :** perfluoro-n-butyrylperoxide [$CF_3$-$CF_2$-$CF_2$-C(O)-O-O-C(O)-$CF_2$-$CF_2$-$CF_3$] in 1,1,1,3,3-pentafluorobutane solution (10 % wt).

**Siloxane clastomers**

Following siloxane elastomers were used for the tests:

**SB-1892** is a non functionalized poly(dimethyl)siloxane (PDMS), supplied by Degussa, characterized by a $M_w$ of 10 kDa and a DP of 140.

**SB-2605** is a vinyl functional poly(dimethyl)siloxane (PDMS), supplied by Degussa, characterized by a $M_w$ of 10 kDa and a DP of 140 and bringing an average of one vinyl group per PDMS chain.

**Gel permeation analysis (GPC)**

Gel permeation measurements for polymer samples were performed at 40°C using a Waters-Alliance HPLC system, using N,N-dimethylformamide (DMF) stabilized with 0,1M of LiBr as the solvent. The GPC was calibrated at 40°C using narrow molecular weight distribution standards of poly(methyl)methacrylate.

Differential Scanning Calorimetry (DSC)

DSC measurements for polymer samples were performed using a Perkin Elmer Pyris 1 instrument, according to ASTM D3418-99. Each sample (15 mg) was heated at a rate of 10 °C per minute in nitrogen up to a maximum temperature of 250°C, at which point the sample was held for 10 minutes. A cooling cycle (rate: -10°C/minute) followed to measure crystallization behavior.

**Viscosimetry**

Intrinsic viscosity (IV) of polymer samples were determined in N,N-dimethylformamide stabilized with 0,1 M of LiBr at 40°C using a Ubbelohde type B viscometer.

Elemental analysis

The sample was completely mineralized under oxidizing conditions ($Na_2O_2$) in a closed Wurtzschmitt-type bomb. The resulting silicate was transformed into a mixed silico-molibdo complex and analyzed in solution by spectrophotometry at 400 nm (method derived from ISO 6382).

**Comparative Example I**

Comparative example 1 is a physical mixture of 75 % wt PVDF homopolymer ($M_w$ = 43 0 kDa; IV = 1,6) and 25 % wt non-functional PDMS ($M_w$ = 10 kDa; DP = 140) that was prepared by solution mixing the two components.

**Examples 1 to 3**

*General polymerization procedure*

The required amount of functional siloxane macromonomer was charged to a 500 ml jacketed autoclave equipped with a stirrer, pressure and temperature sensors and a rupture disk.
The air was removed from the autoclave by 5 consecutive vacuum/$N_2$ purge cycles. 80 g of $VF_2$, followed by 220 g of $CO_2$ were condensed into the reactor, while under vacuum and cooled to - 5°C. Under stirring, the autoclave was then heated to the reaction temperature. Once the temperature reached, the initiator (1,25 mmol) was transferred to the reactor from a cooled high pressure funnel, by rinsing with additional $CO_2$ up to the specified pressure.
The polymerization was stopped at a desired pressure drop corresponding to a known extent of monomer conversion. The autoclave was then cooled and vented under reduced stirrer speed.
The polymer was recovered as a free-flowing dry powder from the open autoclave. The polymer was weighted and characterized by GPC, viscosimetry and elemental analysis.

*Extraction procedure*

Compositions recovered from polymerization were submitted to exhaustive solvent extraction in a Soxhlet apparatus using petroleum ether to eliminate non-grafted siloxane elastomer. The washings from extraction were concentrated under vacuum and shown by $^{19}$F-NMR to contain neither PVDF nor the grafted copolymer.
Residues from extraction were analyzed by elemental analysis (Si) and DSC.

**Example 4**

*Continuous polymerization procedure*

The polymerization was performed in continuous mode using a 2,9 L loop reactor equipped with a centrifugal pump, a tubular heat-exchanger, means for continuous introduction of $VF_2$, cooled initiator solution, functional siloxane elastomer and $CO_2$ at constant specified rates. The polymer suspension was continuously withdrawn by flash-decompression of small portions via a lock-chamber connected to a bag-filter for powder collection, thus maintaining constant the pressure and the concentrations in the reactor.

Air was eliminated from the reactor and all feed lines by repeated vacuum/$N_2$ purge cycles, before charging 2260 g $CO_2$ and 185 g $VF_2$. Under circulation, the loop reactor was heated up to reaction temperature, followed by rapid injection of an initial dose of 4P initiator (2,5 g solution at 2,7% wt) and of functional siloxane elastomer (9,3 g). Continuous feed of $VF_2$ (7,3 g/min), $CO_2$ (73,5 g/min), initiator 4P (0,87 g/min of 2,7% wt solution) and functional siloxane elastomer (0,36 g/min) was then maintained.

The loop reactor was shut down by stopping the monomer and initiator feeds, cooling the reactor and rinsing with $CO_2$. Once all polymer was extracted, the reactor was depressurized.

The polymer was weighted and characterized by GPC, viscosimetry and elemental analysis.

*Extraction procedure*

Compositions recovered from polymerization were submitted to continuous solvent extraction and then analyzed as previously described.

Conditions and results of the polymerization runs as well as properties of the obtained compositions are detailed in the following table.

| run | Siloxane elastomer | | | Polymerisation conditions | | | | Composition properties | | | | After petroleum ether extraction | | | | |
|---|---|---|---|---|---|---|---|---|---|---|---|---|---|---|---|---|
| | type | $M_w$ (kDa) | DP | T (°C) | P (bar) | initiator | siloxane /$VF_2$ (% wt) | $VF_2$ conv. (%) | $M_w$ (kDa) | IV (dl/g) | siloxane (% wt) | siloxane (% wt) | $\Delta H_{f1}$ (J/g) | $T_n$ (°C) | $\Delta H_c$ (J/g) | $T_c$ (°C) |
| Comparative Ex. 1 | SB-1892 | 10 | 140 | | | | | | | | 25 | - | 79 | 178 | -57 | 141 |
| Example 1 | SB-2605 | 10 | 140 | 55 | 310 | X07 | 5 | 12,4 | 3210 | 0,66 | 24 | 18 | 84 | 177 | -60 | 143 75 |
| Example 2 | SB-2605 | 10 | 140 | 55 | 310 | X07 | 1 | 18,1 | 1000 | 1,15 | 6 | 4 | 78 | 178 | -60 | 147 (s) |
| Example 3 | SB-2605 | 10 | 140 | 70 | 260 | TAPPI | 5 | 10,1 | 11670 | 0,29 | 23 | 18 | 67 | 174,5 | -63 | 136 70 |
| Example 4 | SB-2605 | 10 | 140 | 65 | 350 | 4P | 5 | n.d. | 3600 | n.d. | 34 | 18 | 79 | 170 | -61 | 139 |

(n.d. = not determined)

## Claims

1. A composition comprising:

   (A) from 50 to 95 % by weight of a thermoplastic fluorocarbon resin, and

   (B) from 5 to 50 % by weight of at least one at least partially grafted functional siloxane elastomer,

   said composition being non-crosslinked and the grafted functional siloxane elastomer being at least 2,5 % by weight, expressed with respect to the total weight of (A) and (B) free from non-grafted functional siloxane elastomer.

**2.** The composition according to Claim 1, **characterized in that** the fluorocarbon resin is a vinylidene fluoride resin.

**3.** The composition according to Claim 2, **characterized in that** the vinylidene fluoride resin is a vinylidene fluoride homopolymer.

**4.** The composition according to any of the preceding Claims, **characterized in that** the functional group of the functional siloxane elastomer is a moiety having formula selected from the group consisting of $-CH=CH_2$, $-O-C(O)$ $-CH=CH_2$, $-O-C(O)-C(CH_3)=CH_2$, $-O-C(O)-CF=CH_2$, and $-O-C(O)-C(CF_3)=CH_2$.

**5.** The composition according to any of the preceding Claims, **characterized in that** the functional siloxane elastomer has an average polymerization degree (DP) of at least 120.

**6.** The composition according to either claim 2 or 3, **characterized in that** the relation between their intrinsic viscosity (IV), as measured at 40°C in N,N-dimethylformamide, and their molecular weight ($M_w$) expressed in kDalton, as measured by gel permeation chromatography, is described by the following inequality:

$$\log (IV) \leq 0{,}74 \log (M_w) - 1{,}78$$

**7.** A process for the preparation of the composition according to any of the preceding claims, comprising polymerizing at least one fluorinated monomer and at least one functional siloxane elastomer in the presence of a radical initiator.

**8.** The process according to Claim 7, **characterized in that** the polymerization medium comprises carbon dioxide in a liquid or supercritical phase.

**9.** Use of the composition according to any of Claim 1 to 7 as compatibilizer between a fluorocarbon resin phase and a siloxane elastomer phase.

**10.** Use of the composition according to any of Claim 1 to 7 as such or in combination with a fluorocarbon resin in mono- or multilayer structures (films, coatings, hollow bodies, pipes and the like).

Figure 1

logIV ≤ 0,74logMw - 1,78

**European Patent Office**

## EUROPEAN SEARCH REPORT

Application Number

EP 04 10 1626

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 0135, no. 75 (C-667), 19 December 1989 (1989-12-19) & JP 1 240552 A (ASAHI CHEM IND CO LTD), 26 September 1989 (1989-09-26) * abstract * | 1,2,7 | C08F283/12 C08L27/16 C08L51/08 C08L83/10 |
| D,X | PATENT ABSTRACTS OF JAPAN vol. 0141, no. 88 (C-0710), 17 April 1990 (1990-04-17) & JP 2 034609 A (SHIN ETSU CHEM CO LTD), 5 February 1990 (1990-02-05) | 1-7 | |
| Y | * abstract * | 9,10 | |
| Y | US 4 686 135 A (BABA SABURO ET AL) 11 August 1987 (1987-08-11) * claims 1,6,19,20 * | 9,10 | |
| A | PATENT ABSTRACTS OF JAPAN vol. 0171, no. 67 (C-1043), 31 March 1993 (1993-03-31) & JP 4 328147 A (JAPAN SYNTHETIC RUBBER CO LTD), 17 November 1992 (1992-11-17) * abstract * | 1-10 | TECHNICAL FIELDS SEARCHED (Int.Cl.7) C08F C08L |
| A | PATENT ABSTRACTS OF JAPAN vol. 2002, no. 06, 4 June 2002 (2002-06-04) & JP 2002 053848 A (TAIHO IND CO LTD), 19 February 2002 (2002-02-19) * abstract * | 1-10 | |

The present search report has been drawn up for all claims

| Place of search | Date of completion of the search | Examiner |
|---|---|---|
| The Hague | 6 September 2004 | Rodriguez, L |

**EP 1 589 052 A1**

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2004

| Patent document cited in search report | | Publication date | Patent family member(s) | | Publication date |
|---|---|---|---|---|---|
| JP 1240552 | A | 26-09-1989 | NONE | | |
| JP 2034609 | A | 05-02-1990 | JP 7103197 | B | 08-11-1995 |
| US 4686135 | A | 11-08-1987 | JP 1769010 | C | 30-06-1993 |
| | | | JP 4055107 | B | 02-09-1992 |
| | | | JP 61172736 | A | 04-08-1986 |
| | | | JP 1769014 | C | 30-06-1993 |
| | | | JP 4055108 | B | 02-09-1992 |
| | | | JP 61185443 | A | 19-08-1986 |
| | | | JP 1672773 | C | 12-06-1992 |
| | | | JP 3033103 | B | 15-05-1991 |
| | | | JP 61277436 | A | 08-12-1986 |
| | | | JP 1751523 | C | 08-04-1993 |
| | | | JP 4028224 | B | 13-05-1992 |
| | | | JP 61277438 | A | 08-12-1986 |
| | | | JP 1854900 | C | 07-07-1994 |
| | | | JP 5064101 | B | 13-09-1993 |
| | | | JP 62001538 | A | 07-01-1987 |
| | | | JP 1852004 | C | 21-06-1994 |
| | | | JP 5057906 | B | 25-08-1993 |
| | | | JP 62003947 | A | 09-01-1987 |
| | | | JP 1876187 | C | 07-10-1994 |
| | | | JP 5086335 | B | 10-12-1993 |
| | | | JP 62037155 | A | 18-02-1987 |
| | | | JP 1876188 | C | 07-10-1994 |
| | | | JP 5086336 | B | 10-12-1993 |
| | | | JP 62037156 | A | 18-02-1987 |
| | | | JP 1876189 | C | 07-10-1994 |
| | | | JP 5086337 | B | 10-12-1993 |
| | | | JP 62037157 | A | 18-02-1987 |
| | | | JP 1751527 | C | 08-04-1993 |
| | | | JP 4028225 | B | 13-05-1992 |
| | | | JP 62041035 | A | 23-02-1987 |
| | | | JP 1779304 | C | 13-08-1993 |
| | | | JP 4062536 | B | 06-10-1992 |
| | | | JP 62041036 | A | 23-02-1987 |
| | | | JP 1791073 | C | 29-09-1993 |
| | | | JP 4080147 | B | 17-12-1992 |
| | | | JP 62053482 | A | 09-03-1987 |
| | | | AU 561161 | B2 | 30-04-1987 |
| | | | AU 4999885 | A | 02-10-1986 |
| | | | CA 1281626 | C | 19-03-1991 |
| | | | CA 1297769 | C2 | 24-03-1992 |
| | | | DE 3541193 | A1 | 31-07-1986 |
| | | | FR 2576551 | A1 | 01-08-1986 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 04 10 1626

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2004

| Patent document cited in search report | | Publication date | Patent family member(s) | | Publication date |
|---|---|---|---|---|---|
| US 4686135 | A | | GB<br>GB<br>US | 2170148 A ,B<br>2207391 A ,B<br>4714650 A | 30-07-1986<br>01-02-1989<br>22-12-1987 |
| JP 4328147 | A | 17-11-1992 | NONE | | |
| JP 2002053848 | A | 19-02-2002 | NONE | | |

EPO FORM P0459

For more details about this annex : see Official Journal of the European Patent Office, No. 12/82